(19) Europäisches Patentamt
European Patent Office
Office européen des brevets

(11) **EP 4 505 632 B1**

(12) **EUROPEAN PATENT SPECIFICATION**

(45) Date of publication and mention
of the grant of the patent:
**15.10.2025 Bulletin 2025/42**

(21) Application number: **23714757.4**

(22) Date of filing: **29.03.2023**

(51) International Patent Classification (IPC):
***H04B 10/114*** (2013.01)     ***H04B 10/116*** (2013.01)
***H04B 10/85*** (2013.01)

(52) Cooperative Patent Classification (CPC):
**H04B 10/1149; H04B 10/116; H04B 10/85**

(86) International application number:
**PCT/EP2023/058119**

(87) International publication number:
**WO 2023/194170 (12.10.2023 Gazette 2023/41)**

(54) **A SECURE OPTICAL WIRELESS COMMUNICATION LINK**

SICHERE OPTISCHE DRAHTLOSE KOMMUNIKATIONSVERBINDUNG

LIAISON DE COMMUNICATION SANS FIL OPTIQUE SÉCURISÉE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **05.04.2022 EP 22166772**

(43) Date of publication of application:
**12.02.2025 Bulletin 2025/07**

(73) Proprietor: **Signify Holding B.V.**
**5656 AE Eindhoven (NL)**

(72) Inventors:
• **ARULANDU, Karnekumar**
**5656 AE Eindhoven (NL)**
• **HAENEN, Ludovicus, Johannes, Lambertus**
**5656 AE Eindhoven (NL)**

(74) Representative: **Verweij, Petronella Daniëlle**
**Signify Netherlands B.V.**
**Intellectual Property**
**High Tech Campus 7**
**5656 AE Eindhoven (NL)**

(56) References cited:
**EP-A1- 3 943 875     AU-A4- 2021 103 975**

• **CHO SUNGHWAN ET AL: "Securing Visible Light
Communications with Spatial Jamming", ICC
2019 - 2019 IEEE INTERNATIONAL
CONFERENCE ON COMMUNICATIONS (ICC),
IEEE, 20 May 2019 (2019-05-20), pages 1 - 6,
XP033581695, DOI: 10.1109/ICC.2019.8761165**

**Description**

FIELD OF THE INVENTION

The invention relates to the field of optical wireless communication, such as Li-Fi communication. More particularly, various apparatus, systems, and methods are disclosed herein related to a secure optical wireless communication system.

BACKGROUND OF THE INVENTION

To enable more and more electronic devices like laptops, tablets, and smartphones to connect wirelessly to the Internet, wireless communication confronts unprecedented requirements on data rates and link qualities, and such requirements keep on growing year over year, considering the emerging digital revolution related to Internet-of-Things (IoT). Radio frequency technology like Wi-Fi has limited spectrum capacity to embrace this revolution. In the meanwhile, light fidelity (Li-Fi) is drawing more and more attention with its intrinsic security enhancement and capability to support higher data rates over the available bandwidth in visible light, Ultraviolet (UV), and Infrared (IR) spectra. Furthermore, Li-Fi is directional and shielded by light blocking materials, which provides it with the potential to deploy a larger number of access points, as compared to Wi-Fi, in a dense area of users by spatially reusing the same bandwidth. These key advantages over wireless radio frequency communication make Li-Fi a promising secure solution to mitigate the pressure on the crowded radio spectrum for IoT applications and indoor wireless access. Other possible benefits of Li-Fi may include guaranteed bandwidth for a certain user, and the ability to function safely in areas otherwise susceptible to electromagnetic interference. Therefore, Li-Fi is a very promising technology to enable the next generation of immersive connectivity.

However, it is more challenging to obstruct an optical wireless signal in an outdoor application scenario as compared to an indoor scenario, because optical beams are emitted over free space and not all emitted optical signals are captured by a remote receiver, thereby posing potential risk to the security of the link.

CHO SUNGHWAN ET AL, "Securing Visible Light Communications with Spatial Jamming" is related to a secure visible light communication system with a spatial jamming scheme, such that an LED transmitter can choose to convey data or a jamming signal based on the available location knowledge of a legitimate user (UE) and an eavesdropper.

EP3943875A1 is related to an optronic system for a countermeasure unit to optically communicate with another communication terminal. The countermeasure unit comprises a laser beam source and a directing device for a laser beam of the laser beam source and is configured to dazzle or to jam an object of threat.

AU2021103975A4 is related to a method for constructing a secure visible light wireless link based on heterogeneous artificial noise sources.

SUMMARY OF THE INVENTION

To provide a secure optical wireless communication link, an optical data signal is emitted together with scrambling/jamming/masking signals such that the optical data signal can only be recovered within an intended range. Beyond the intended range, the scrambling/jamming, masking signal becomes dominant such that the optical data signal is no longer recoverable.

In view of the above, the present disclosure is directed to methods, apparatus, and systems for providing improved security to an optical wireless communication system. More particularly, the goal of this invention is achieved by an optical wireless communication device as claimed in claim 1, by an optical wireless communication system as claimed in claim 13 and 14, respectively, and by a method of an optical wireless communication device as claimed in claim 15.

In accordance with a first aspect of the invention an optical wireless communication device is provided. An optical wireless communication device comprises a data transmitter configured to transmit an optical data signal; a masking transmitter configured to transmit an optical masking signal; wherein the optical masking signal comprising a wavelength component substantially identical to a wavelength component of the optical data signal. The optical wireless communication device is configured to set a certain distance by controlling at least one of the data transmitter and the masking transmitter, such that a coverage area of the optical data signal is overlapped with a coverage area of the optical masking signal to a certain extent at the certain distance, keeping a signal to noise ratio of the optical data signal below a threshold and complicating a recovery of the optical data signal by another device located at and beyond that certain distance.

The optical wireless communication may be carried out in visible light, Ultraviolet (UV), and Infrared (IR) spectra. Thus, the optical wireless communication may also be called a Li-Fi communication or a Visible Light Communication (VLC). Both of the data transmitter and the masking transmitter comprise at least a light source for optical data transmission. The light source or light emitter may be one of a light-emitting diode (LED), a laser diode, a vertical-cavity surface-emitting laser (VCSEL), or an Edge Emitting Laser Diode (EELD). Preferably, the light source comprises at least one of a LED and a VCSEL.

Since the optical masking signal comprises a wavelength component substantially identical to a wavelength component of the optical data signal, when there is an overlapping of the coverage areas of the optical masking signal and the optical data signal, part of the optical data signal may not be demodulated. The masking signal may also be emitted with a higher output power, and then the signal to noise ratio of the optical data signal is further degraded. When the signal to noise ratio of the optical data signal is below a certain level, the optical data signal can hardly be demodulated any more. Therefore, the optical wireless communication device may control at least one of the optical data transmitter and the masking transmitter to set the certain distance d to shield optical communication beyond that range.

Note that the substantial identical wavelength component between the optical masking signal and the optical data signal may also be interpreted as an identical frequency component. On top of the identical wavelength component or frequency component, different modulation and coding schemes may be applied as well.

For a certain application scenario, there may be a typical communication distance, such as the typical separation distance between two devices. The optical wireless communication device may then set the certain distance d based on the typical communication distance or intended communication distance to allow optical data signals can be received by the intended remote device without the risk of eavesdropped by a further remote device.

Beneficially, the optical wireless communication device is further configured to change the certain distance by at least one of: adjusting a beam angle of at least one of the data transmitter and the masking transmitter; tilting at least one of the data transmitter and the masking transmitter to make the coverage areas of the optical masking signal and the optical data signal move towards or away from each other; changing an inter-transmitter separation distance between the data transmitter and the masking transmitter; and changing an output power of at least one of the data transmitter and the masking transmitter.

Preferably, the masking transmitter is configured to transmit the optical masking signal at an output power level at least the same as the data transmitter

In another example, the optical masking signal are transmitted at a higher output power level than the data signal, when security requirement is more critical.

In one example, the device comprises at least one further masking transmitter, wherein the at least one further masking transmitter is configured to transmit a further optical masking signal, the device further configured to set the certain distance by further controlling the at least one further masking transmitter such that the coverage area of the optical data signal is overlapped by a combined coverage area of the optical masking signal and the at least one further optical masking signal at the certain distance from the device.

Beneficially, the masking transmitter and the further masking transmitter are placed on different sides of the data transmitter such that the coverage area of the optical data signal is surrounded by the combined coverage areas.

Preferably, the masking transmitter and the further masking transmitter are further configured to send alignment information to assist a beam alignment between the data transmitter and a remote receiver.

In addition to secure the optical data link, the masking transmitter and the further masking transmitter may also be used to assist the alignment of the narrow beam of the optical data transmitter. The alignment information may be sent with a wider beam angle than the optical data signal, and then such information can be detected easily without dedicated alignment procedure.

More preferably, the masking transmitter and the further masking transmitter are further configured to use Code-Division Multiple Access, CDMA, to send the alignment information, respectively; wherein the alignment information is transmitted at a frequency range different from either the optical masking signals or the optical data signal.

By using CDMA based access control, alignment information sent by the masking transmitter and the further masking transmitter can be detected by a receiving device simultaneously. Thus, the latency of alignment procedure can be reduced.

In one example, the alignment information comprises information regarding center of gravity of the data transmitter.

The masking or jamming transmitter may also be used to assist automatic aiming of the optical data transmission by using the COG (Centre Of Gravity) principle to align the two devices with each other. The COG based alignment information may be transmitted via CDMA signals, which are superimposed on optical masking or jamming signals, such that a CDMA alignment signal for COG alignment operates at a different frequency range than the optical data signal and optical masking signals.

Advantageously, the device further comprises a distance detector configured to estimate a communication distance from a remote device intended to establish optical wireless communication with the device, the device further configured to control the masking transmitter and the further masking transmitter such that the communication distance is within the certain distance.

When the separation between the optical wireless communication device and the remote device is unknown, the optical wireless communication device may set the certain distance d based on a typical communication distance or intended communication distance according to a certain application. With the furthermore accurate communication distance estimated via the distance detector, the security performance can be further improved, such that the certain distance d can be adjusted accordingly. This is very beneficial when there is a mobility with the optical wireless communication device and/or the remote device.

As one option, the distance detector is a Time-of-Flight (ToF) sensor.

Beneficially, the distance detector is configured to estimate the communication distance based on one of Time-of-Arrival, signal strength, or phase difference information of one or more received signals from the remote device

Different distance measurement technologies may be used. Correspondingly, the distance detector may be based on either one of or a combination of these technologies.

In one example, the device further comprises an optical data receiver configured to receive optical data signals.

The optical data receiver comprises at least a light detector. The light detector, also called photo detector or photo sensor, is a photodiode, which may be a PIN diode, an Avalanche Photo Diode (APD), or a photomultiplier.

The optical wireless communication device may also comprise an optical data transceiver configured to send and receive optical data signals.

In accordance with a second aspect of the invention, an optical wireless communication system is provided. An optical wireless communication system comprises an optical wireless communication device according to the present invention; and a remote optical data receiver configured to receive the optical data signal from the device; wherein the remote optical data receiver is located within the certain distance from the device

In accordance with a further aspect of the invention, an optical wireless communication system is provided. An optical wireless communication system comprises an optical wireless communication device according to the present invention; and a remote receiver comprising an optical data receiver configured to receive the optical data signal from the device; at least two auxiliary receivers configured to receive the alignment information from the masking transmitter and the further masking transmitter of the device; wherein the remote receiver is located within the certain distance from the device.

In accordance with a further aspect of the invention, a method of an optical wireless communication device is provided. The method comprises following steps of the optical wireless communication device: transmitting an optical data signal by a data transmitter; transmitting an optical masking signal by a masking transmitter; setting a certain distance by controlling at least one of the data transmitter and the masking transmitter, such that a coverage area of the optical data signal is overlapped by a coverage area of the optical masking signal to a certain extent at the certain distance, thus keeping a signal to noise ratio of the optical data signal below a threshold and complicating a recovery of the optical data signal by another device located at and beyond that certain distance; wherein the optical masking signal comprising a wavelength component substantially identical to a wavelength component of the optical data signal.

## BRIEF DESCRIPTION OF THE DRAWINGS

In the drawings, like reference characters generally refer to the same parts throughout the different figures. Also, the drawings are not necessarily to scale, emphasis instead generally being placed upon illustrating the principles of the invention.

FIG. 1 illustrates an optical wireless communication device according to the present invention;
FIG. 2 illustrates an example of the optical wireless communication device according to the present invention;
FIG. 3 demonstrates a side view of parallel spatial streams of data signal and jammers over distance;
FIG. 4 illustrates an optical wireless communication device with Centre Of Gravity (COG) based alignment;
FIG. 5 illustrates an optical wireless communication system according to the present invention;
FIG. 6 illustrates an optical wireless communication system according to the present invention; and
FIG. 7 shows a block diagram of a method of the optical wireless communication device.

## DETAILED DESCRIPTION OF EMBODIMENTS

The embodiments set forth below represent information to enable those skilled in the art to practice the embodiments. Upon reading the following description in light of the accompanying drawings, those skilled in the art will understand the concepts of the disclosure and will recognize applications of these concepts not particularly addressed herein. It should be understood that these concepts and applications fall within the scope of the disclosure.

Shaping and directing an optical beam containing data is simpler as compared to doing the similar with a radio link. Furthermore, reflected signal from a scattered optical beam has a high attenuation and is therefore practically difficult to be recovered by means of a collimator and detector. Therefore, it is advantageous to use optical data links for wireless communication applications where security is considered to be critical.

However, having a collimated beam may not be sufficient as only a portion of the emitted signal will be captured by the receiving end and the remaining signal continues to travel further. The remaining signal may be captured at a longer distance and be collimated for demodulation (optical gain by means of lens or collimator comes free of noise), and thereby affects the security performance. To avoid an optical wireless signal, or a VLC/Li-Fi signal, from being captured and recovered at a range longer than expected, masking/scrambling/jamming signals may be added along with the data signal as parallel spatial streams to shield the data signal from being eavesdropped.

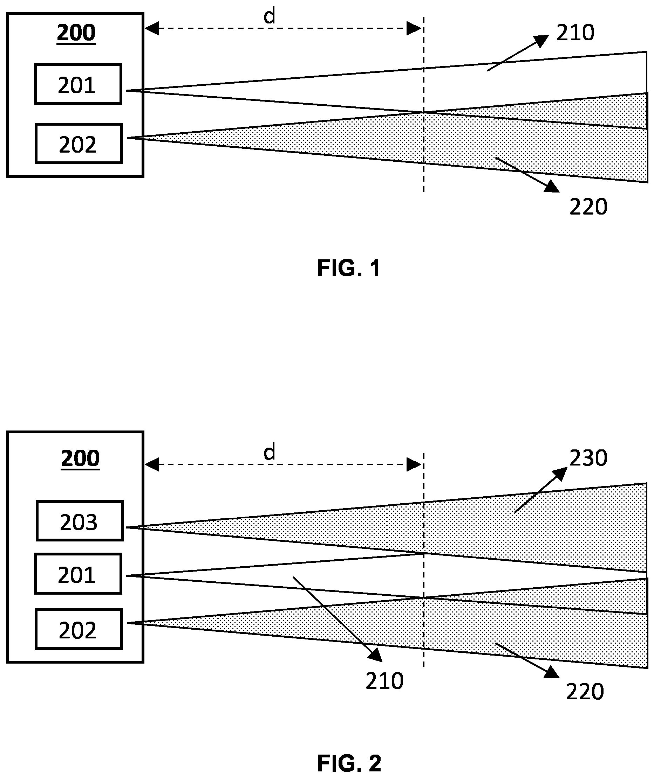

FIG. 1 illustrates an optical wireless communication device 200 according to the present invention. The optical wireless communication device 200 comprises at least a data transmitter 201 and a masking transmitter 202. The data transmitter 201 is configured to transmit an optical data signal, and the masking transmitter 202 is configured to transmit an optical masking signal. The optical masking signal comprises a wavelength component substantially identical to a wavelength component of the optical data signal. The device 200 is configured to set a certain distance $d$ by controlling at least one of the data transmitter 201 and the masking transmitter 202, such that a coverage area 210 of the optical data signal is overlapped with a coverage area 220 of the optical masking signal to a certain extent at the certain distance $d$, keeping a signal to noise ratio of the optical data signal below a threshold for demodulating the data signal. And then, the optical data signal cannot be recovered by another device located at and beyond that certain distance $d$.

FIG. 2 illustrates another example of the optical wireless communication device 200 according to the present invention. In this example, the optical wireless communication device 200 comprises a data transmitter 201, a masking transmitter 202, and at least one further masking transmitter 203. The at least one further masking transmitter 203 is configured to transmit a further optical masking signal. The certain distance $d$ for secure communication is set by the device 200 by controlling at least one of the data transmitter 201, the masking transmitter 202, and at least one further masking transmitter 203, such that the coverage area 210 of the optical data signal is overlapped by a combined coverage area 220, 230 of the optical masking signal and the at least one further optical masking signal at the certain distance $d$ from the device 200. As shown in the figure, the masking transmitter 202 and at least one further masking transmitter 203 may be arranged around the data transmitter 201 symmetrically. For example, the masking transmitter 202 and at least one further masking transmitter 203 are placed on different sides of the data transmitter (201) such that the coverage area (210) of the optical data signal is surrounded by the combined coverage areas (220, 230).

The optical wireless communication device 200 may further comprises a distance detector to estimate a communication distance from a remote device, with which the optical wireless communication device 200 is intended to establish an optical wireless communication link. The communication distance may be estimated based on a technology according to Time-of-Arrival, signal strength, or phase difference information of one or more received signals from the remote device. Upon information on the desired communication distance, the device 200 may control at least one of the data transmitter 201, the masking transmitter 202 and the further masking transmitter 203, such that the desired communication distance is within the certain distance $d$. And then, a secured communication link can be provided, with other devices beyond the certain distance $d$ incapable of detecting the date signals.

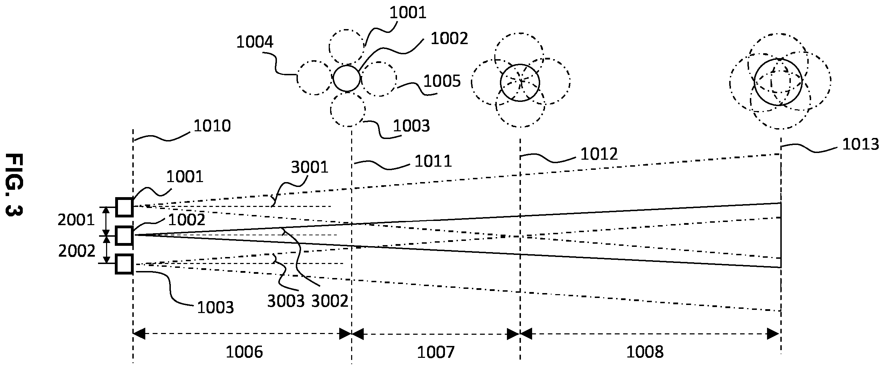

FIG. 3 demonstrates a side view of parallel spatial streams of data signal and jammers over distance. On the vertical axis, a masking transmitter or jammer 1001 is positioned at a distance of 2001 from the data transmitter or signal emitter 1002. A second jammer 1003 is placed on the vertical axis below 1001 at equal distance of 2001 from the signal emitter 1002. Likewise, there are also two jammers on the same axis as the signal emitter 1002 at distances 2003 and 2004 (it is not visible on the side view as it is on the same axis as the signal emitter 1002), respectively. The horizontal axis represents the distance starting from zero at the left and increasing towards the right. When looking at the ranges on horizontal axis, it can roughly be divided into the following three ranges: 1006 for no overlap between data signal and masking or jammer signals; range 1007, there is a partial overlap between data signal and jammer signals; range 1008, for complete overlap between jammer and signal. The four jammers and the data signal form a radiation pattern at specific distances 1011, 1012 and 1013 as shown in FIG. 3.

For simplification, a simple example is illustrated as a fully symmetrical system, where the distances 2001, 2002, 2003 and 2004 are considered to be equal and emission half-angles 3001, 3002, 3003 and 3004 are considered to be equal as well. In an actual implementation, different separate distances between jammers and data transmitter and different emission half angles may be adopted. Within the nearest range 1006, there is no overlap between optical data signal 1002, and jamming signals 1001, 1003, 1004 and 1005, where the optical jammer signal 1001 is radiated with an emission half-angle ($a$), 3001, that irradiates a surface area with a radius, $r_1$, over a distance $l$ as

$$r_1(l) = tan(\alpha_{3001})l$$

and the optical data signal 1002 is radiated with an emission half-angle ($\alpha$), 3002, that irradiates a surface area with a radius, $r_2$, over a distance $l$ as

$$r_2(l) = tan(\alpha_{3002})l.$$

With the emission half-angles 3001, and 3002 of the transmitters 1001 and 1002; and the distance between the two transmitters, 2001, the maximum non-overlapping range of $l_{1011}$ can be determined as

$$r_1 + r_2 = l_{2001,max}$$

$$tan(\alpha_{3001})l_{1006,max} + tan(\alpha_{3002})l_{1006,max} = l_{2001}$$

$$l_{1011} = \frac{l_{2001}}{tan(\alpha_{3001}) + tan(\alpha_{3002})}$$

Within the range $l_{1006}$, the optical data signal can be received in a radius $r_2$.

Beyond the range of $l_{1006,max}$, a new rage is defined as the overlapping range, $l_{1007}$, where the jamming signal partially overlaps the optical data signal, but the optical data signal may still be captured. The maximum length of, $l_{1007}$, can be determined as

$$l_{1012} = \frac{l_{2001}}{tan(\alpha_{3001})}.$$

For sake of simple understanding (and symmetry) the received signal area is considered to be circular with radius $rr_1$ for the range 1006 and also circular area with radius $rr_2$ (taking the maximum circular reception area of signal 6002) for range 1007. A practical example is given by half-angles 3001, and 3002 that are set to 1 degree, and distance between VLC jammers 1001 and VLC signal 1002 set to be 0.5 meters. Within this example the VLC signal within range $l < l_{1011}$ results in signal area with radius $rr_1(l) = tan(\alpha_{3002})l$. For the range $l_{1011} \leq l \leq l_{1012}$, the VLC jamming signals start to overlap VLC signal. The VLC reception area can be simplified to a circular reception area with radius $rr_2 = l_{2001} - tan(\alpha_{3002})l$. For $l > l_{1012}$, the jamming signals completely overlap the VLC signal 1002, and they will thereby prevent detection and demodulation of VLC signal 1002. When combining the ranges 1006 and 1007, each with their own coverage areas with radius $rr_1$ and $rr_2$, the coverage area with radius $rr$ over distances $l$ becomes $rr = rr_1$ for $l < 1006_{max}$, and $rr2$ for $l_{1011} \leq l \leq l_{1012}$. The practical range of the secure optical data link will be slightly less as the detector requires a minimum surface area to be irradiated with a minimum amount of power, e.g., the practical distance in which the signal can be received varies between 5 meters and 25 meters.

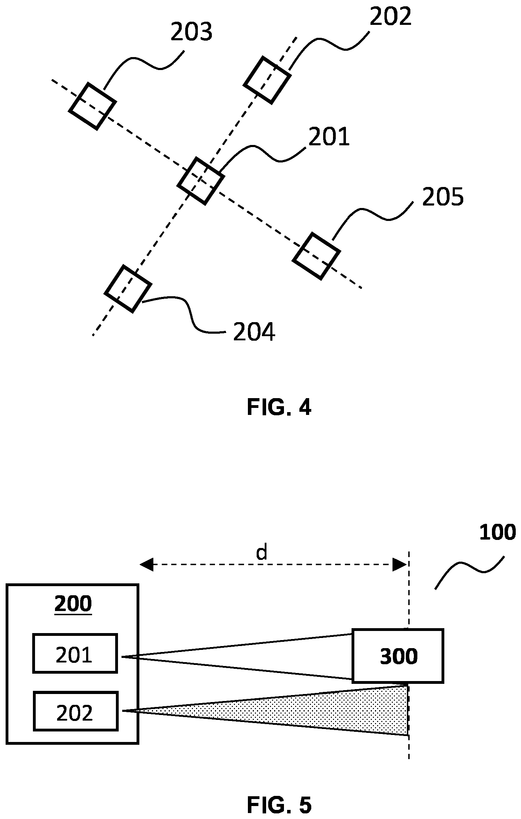

FIG. 4 illustrates an optical wireless communication device with Centre Of Gravity (COG) based alignment. In this setup, the masking or jamming transmitter is also used to assist automatic aiming of the optical data transmission by using Code Division Multiple Access (CDMA) the COG (Centre Of Gravity) to align the two devices with each other. As one example, the COG based alignment system via CDMA signals may be superimposed on optical masking or jamming signals, such that a CDMA alignment signal for COG alignment operates at a different frequency range than the optical data signal and optical masking signals. The data transmitter 201 is located at the center of the optical wireless communication device 200, which is surrounded by masking transmitters 202, 203, 204 and 205. The masking transmitters 202, 203, 204 and 205 are further configured to operate as CDMA transmitters. In a further option, the masking transmitters 202, 203, 204 and 205 are further equipped with CDMA detectors to receive alignment signals from the remote device.

FIG. 4 shows a misalignment by rotating with respect to the data transmitter 201 as depicted in FIG. 3 to demonstrate that the alignment system uses COG: the aimable optical wireless communication device 200 aligns the center of the data transmitter 201 to a remote receiving device. To reduce the impact of the misalignment in rotation of the data transmitter 201 on the performance of data communication, it is preferable that the coverage area of the data transmitter to be circular to allow the freedom for rotation.

FIG. 5 illustrates an optical wireless communication system 100 according to the present invention. The optical wireless communication system 100 comprises an optical wireless communication device 200 according to the present invention; and a remote optical data receiver 300. The remote optical data receiver 300 is located within the certain distance $d$ from the device 200 for receiving the optical data signal from the device 200.

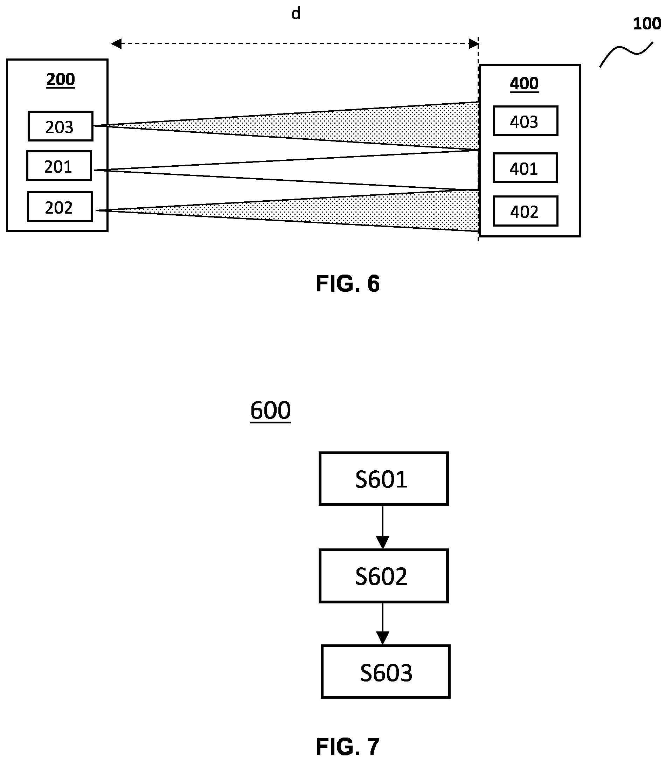

FIG. 6 illustrates an optical wireless communication system 100 according to the present invention. The optical wireless communication device 200 comprises a data transmitter 201, a masking transmitter 202 and a further masking transmitter 203. The masking transmitter 202 and the further masking transmitter 203 are further configured to send alignment information to assist a beam alignment between the data transmitter 201 and a remote receiver 400. The remote receiver 400 comprises an optical data receiver 401 configured to receive the optical data signal from the device 200; at least two auxiliary receivers 402, 403 configured to receive the alignment information from the masking transmitter 202 and the further masking transmitter 203 of the optical wireless communication device 200. The remote receiver 400 is located within the certain distance $d$ from the device 200.

The optical wireless communication system 100 may also comprise a pair of transceiver, which establish a bi-directional optical link. In that case, the optical wireless communication device 200 comprises an optical data transceiver, a masking transmitter and a further masking transmitter. The remote device 300 has the same set up as the optical wireless communication device 200, which also comprises an optical data transceiver, a masking transmitter and a further masking transmitter.

Similarly, if CDMA-based alignment is supported, the two remote devices may have the same following basic setup: an optical data transceiver configured to send optical data signals, a masking transmitter, a further masking transmitter, a first CDMA transceiver collocated with the masking transmitter, a second CDMA transceiver collocated with the further masking transmitter. Alternatively, the first CDMA transceiver and the masking transmitter may be implemented as a single auxiliary transceiver, which is configured to send masking/jamming signals and to send or detect CDMA-based alignment information on a different frequency other than the masking/jamming signals. The second CDMA transceiver and the further masking transmitter may also be implemented as a single auxiliary transceiver, which is configured to send masking/jamming signals and to send or detect CDMA-based alignment information on a different frequency other than the masking/jamming signals.

FIG. 7 shows a block diagram of a method 600 of the optical wireless communication device 200. The method 600 comprises the optical wireless communication device 200 carries out, in step S601, transmitting an optical data signal by a data transmitter 201; in step S602, transmitting S602 an optical masking signal by a masking transmitter 202; and then in step S603, setting a certain distance $d$ by controlling at least one of the data transmitter 201 and the masking transmitter 202, such that a coverage area 210 of the optical data signal is overlapped by a coverage area 220 of the optical masking signal to a certain extent at the certain distance, thus keeping a signal to noise ratio of the optical data signal below a threshold and complicating a recovery of the optical data signal by another device located at and beyond that certain distance d; wherein the optical masking signal comprising a wavelength component substantially identical to a wavelength component of the optical data signal.

The methods according to the invention may be implemented on a computer as a computer implemented method, or in dedicated hardware, or in a combination of both.

Executable code for a method according to the invention may be stored on computer/machine readable storage means. Examples of computer/machine readable storage means include non-volatile memory devices, optical storage medium/devices, solid-state media, integrated circuits, servers, etc. Preferably, the computer program product comprises non-transitory program code means stored on a computer readable medium for performing a method according to the invention when said program product is executed on a computer.

Methods, systems, and computer-readable media (transitory and non-transitory) may also be provided to implement selected aspects of the above-described embodiments.

## Claims

1. An optical wireless communication device (200) comprising:

   - a data transmitter (201) configured to transmit an optical data signal;
   - a masking transmitter (202) configured to transmit an optical masking signal;
   wherein the optical masking signal comprising a wavelength component substantially identical to a wavelength component of the optical data signal;
   the device (200) configured to set a certain distance ($d$) by controlling at least one of the data transmitter (201) and the masking transmitter (202), such that a coverage area (210) of the optical data signal is overlapped with a coverage area (220) of the optical masking signal to a certain extent at the certain distance ($d$), keeping a signal to noise ratio of the optical data signal below a threshold and complicating a recovery of the optical data signal by another device located at and beyond that certain distance ($d$).

2. The device (200) of claim 1, the device (200) further configured to change the certain distance ($d$) by at least one of:

   - adjusting a beam angle of at least one of the data transmitter (201) and the masking transmitter (202);
   - tilting at least one of the data transmitter (201) and the masking transmitter (202) to make the coverage areas of the optical masking signal and the optical data signal move towards or away from each other;
   - changing an inter-transmitter separation distance between the data transmitter (201) and the masking transmitter (202); and
   - changing an output power of at least one of the data transmitter (201) and the masking transmitter (202).

3. The device (200) of claim 1 or 2, wherein the masking transmitter (202) is configured to transmit the optical masking signal at an output power level at least the same as the data transmitter (201).

4. The device (200) of any one of previous claims, the device (200) comprising at least one further masking transmitter (203), wherein the at least one further masking transmitter (203) is configured to transmit a further optical masking signal, the device (200) further configured to set the certain distance ($d$) by further controlling the at least one further masking transmitter (203) such that the coverage area (210) of the optical data signal is overlapped by a combined coverage area (220, 230) of the optical masking signal and the at least one further optical masking signal at the certain distance ($d$) from the device (200).

5. The device (200) of claim 4, wherein the masking transmitter (202) and the further masking transmitter (203) are placed on different sides of the data transmitter (201) such that the coverage area (210) of the optical data signal is surrounded by the combined coverage areas (220, 230).

6. The device (200) of claim 4 or 5, wherein the masking transmitter (202) and the further masking transmitter (203) are further configured to send alignment information to assist a beam alignment between the data transmitter (201) and a remote receiver.

7. The device (200) of claim 6, wherein the masking transmitter (202) and the further masking transmitter (203) are further configured to use Code-Division Multiple Access, CDMA, to send the alignment information, respectively; wherein the alignment information is transmitted at a frequency range different from either the optical masking signals or the optical data signal.

8. The device (200) of claim 6 or 7, wherein the alignment information comprises information regarding center of gravity of the data transmitter (201).

9. The device (200) of any one of previous claims, the device (200) further comprising a distance detector configured to estimate a communication distance from a remote device intended to establish optical wireless communication with the device (200), the device (200) further configured to control the masking transmitter (202) and the further masking transmitter (203) such that the communication distance is within the certain distance ($d$).

10. The device (200) of claim 9, wherein the distance detector is a Time-of-Flight, ToF, sensor.

11. The device (200) of claim 9, wherein the distance detector is configured to estimate the communication distance based on one of Time-of-Arrival, signal strength, or phase difference information of one or more received signals from the remote device.

12. The device (200) of any one of the previous claims, the device (200) further comprising an optical data receiver configured to receive optical data signals.

13. An optical wireless communication system (100) comprising:

  - an optical wireless communication device (200) according to claim 1; and
  - a remote optical data receiver (300) configured to receive the optical data signal from the device (200);

  wherein the remote optical data receiver (300) is located within the certain distance (d) from the device (200).

14. An optical wireless communication system (100) comprising:

  - an optical wireless communication device (200) according to claim 6; and
  - a remote receiver (400) comprising:

    - an optical data receiver (401) configured to receive the optical data signal from the device (200);
    - at least two auxiliary receivers (402, 403) configured to receive the alignment information from the masking transmitter (202) and the further masking transmitter (203) of the device (200);

  wherein the remote receiver (400) is located within the certain distance (d) from the device (200).

15. A method (600) of an optical wireless communication device (200), the method comprising following steps of the device (200):

- transmitting (S601) an optical data signal by a data transmitter (201);
- transmitting (S602) an optical masking signal by a masking transmitter (202);
- setting (S603) a certain distance ($d$) by controlling at least one of the data transmitter (201) and the masking transmitter (202), such that a coverage area (210) of the optical data signal is overlapped by a coverage area (220) of the optical masking signal to a certain extent at the certain distance, thus keeping a signal to noise ratio of the optical data signal below a threshold and complicating a recovery of the optical data signal by another device located at and beyond that certain distance ($d$);

wherein the optical masking signal comprising a wavelength component substantially identical to a wavelength component of the optical data signal.

**Patentansprüche**

1. Vorrichtung (200) für optische drahtlose Kommunikation, umfassend:

- einen Datenübermittler (201), der konfiguriert ist, um ein optisches Datensignal zu übermitteln;
- einen Maskierungsübermittler (202), der konfiguriert ist, um ein optisches Maskierungssignal zu übermitteln;

das optische Maskierungssignal umfassend eine Wellenlängenkomponente, die im Wesentlichen mit einer Wellenlängenkomponente des optischen Datensignals identisch ist;
wobei die Vorrichtung (200) konfiguriert ist, um eine bestimmte Entfernung (d) durch ein Steuern von mindestens einem des Datenübermittlers (201) und des Maskierungsübermittler (202) derart einzustellen, dass ein Abdeckungsbereich (210) des optischen Datensignals mit einem Abdeckungsbereich (220) des optischen Maskierungssignals in einem bestimmten Ausmaß in der bestimmten Entfernung (d) überlappt, wobei ein Signal-zu-Rausch-Verhältnis des optischen Datensignals unter einem Schwellenwert gehalten wird und eine Wiederherstellung des optischen Datensignals durch eine andere Vorrichtung, die sich in oder jenseits dieser bestimmten Entfernung (d) befindet, erschwert wird.

2. Vorrichtung (200) nach Anspruch 1, wobei die Vorrichtung (200) ferner konfiguriert ist, um die bestimmte Entfernung (d) durch mindestens eines zu ändern von:

- Anpassen eines Strahlwinkels von mindestens einem des Datenübermittlers (201) und des Maskierungsübermittlers (202);
- Kippen von mindestens einem des Datenübermittlers (201) und des Maskierungsübermittlers (202), um die Abdeckungsbereiche des optischen Maskierungssignals und des optischen Datensignals aufeinander zu oder voneinander weg zu bewegen;
- Ändern einer Inter-Übermittlertrennentfernung zwischen dem Datenübermittler (201) und dem Maskierungsübermittler (202); und
- Ändern einer Ausgangsleistung von mindestens einem des Datenübermittlers (201) und des Maskierungsübermittlers (202).

3. Vorrichtung (200) nach Anspruch 1 oder 2, wobei der Maskierungsübermittler (202) konfiguriert ist, um das optische Maskierungssignal mit einem Ausgangsleistungspegel zu übermitteln, der mindestens der gleiche wie der des Datenübermittlers (201) ist.

4. Vorrichtung (200) nach einem der vorstehenden Ansprüche, die Vorrichtung (200) umfassend mindestens einen weiteren Maskierungsübermittler (203), wobei der mindestens eine weitere Maskierungsübermittler (203) konfiguriert ist, um ein weiteres optisches Maskierungssignal zu übermitteln, wobei die Vorrichtung (200) ferner konfiguriert ist, um die bestimmte Entfernung (d) durch weiteres Steuern des mindestens einen weiteren Maskierungsübermittlers (203) derart einzustellen, dass der Abdeckungsbereich (210) des optischen Datensignals durch einen kombinierten Abdeckungsbereich (220, 230) des optischen Maskierungssignals und des mindestens einen weiteren optischen Maskierungssignals in der bestimmten Entfernung (d) von der Vorrichtung (200) überlappt wird.

5. Vorrichtung (200) nach Anspruch 4, wobei der Maskierungsübermittler (202) und der weitere Maskierungsübermittler (203) derart auf unterschiedlichen Seiten des Datenübermittlers (201) platziert sind, dass der Abdeckungsbereich (210) des optischen Datensignals durch die kombinierten Abdeckungsbereiche (220, 230) umgeben ist.

**6.** Vorrichtung (200) nach Anspruch 4 oder 5, wobei der Maskierungsübermittler (202) und der weitere Maskierungsübermittler (203) ferner konfiguriert sind, um Ausrichtungsinformationen zu senden, um eine Strahlausrichtung zwischen dem Datenübermittler (201) und einem entfernten Empfänger zu unterstützen.

**7.** Vorrichtung (200) nach Anspruch 6, wobei der Maskierungsübermittler (202) und der weitere Maskierungsübermittler (203) ferner konfiguriert sind, um Code-Multiplex-Vielfachzugriff, CDMA, zu verwenden, um die jeweiligen Ausrichtungsinformationen zu senden; wobei die Ausrichtungsinformationen in einem Frequenzbereich übermittelt werden, der sich entweder von den optischen Maskierungssignalen oder dem optischen Datensignal unterscheidet.

**8.** Vorrichtung (200) nach Anspruch 6 oder 7, wobei die Ausrichtungsinformationen Informationen bezüglich des Schwerpunkts des Datenübermittlers (201) umfassen.

**9.** Vorrichtung (200) nach einem der vorstehenden Ansprüche, die Vorrichtung (200) ferner umfassend einen Entfernungsdetektor, der konfiguriert ist, um eine Kommunikationsentfernung von einer entfernten Vorrichtung zu schätzen, die ausgelegt ist, um eine optische drahtlose Kommunikation mit der Vorrichtung (200) herzustellen, wobei die Vorrichtung (200) ferner konfiguriert ist, um den Maskierungsübermittler (202) und den weiteren Maskierungsübermittler (203) derart zu steuern, dass die Kommunikationsentfernung innerhalb der bestimmten Entfernung (d) liegt.

**10.** Vorrichtung (200) nach Anspruch 9, wobei der Entfernungsdetektor ein Flugzeitsensor, ToF-Sensor, ist.

**11.** Vorrichtung (200) nach Anspruch 9, wobei der Entfernungsdetektor konfiguriert ist, um die Kommunikationsentfernung basierend auf Informationen zu einer Ankunftszeit, Signalstärke oder Phasendifferenz eines oder mehrerer empfangener Signale von der entfernten Vorrichtung zu schätzen.

**12.** Vorrichtung (200) nach einem der vorstehenden Ansprüche, die Vorrichtung (200) ferner umfassend einen optischen Datenempfänger, der konfiguriert ist, um optische Datensignale zu empfangen.

**13.** System (100) für optische drahtlose Kommunikation, umfassend:

- eine Vorrichtung (200) für optische drahtlose Kommunikation nach Anspruch 1; und
- einen entfernten optischen Datenempfänger (300), der konfiguriert ist, um optische Datensignale von der Vorrichtung (200) zu empfangen;

wobei sich der entfernte optische Datenempfänger (300) innerhalb einer bestimmten Entfernung (d) von der Vorrichtung (200) befindet.

**14.** System (100) für optische drahtlose Kommunikation, umfassend:

- eine Vorrichtung (200) für optische drahtlose Kommunikation Anspruch 6; und
- einen entfernten Empfänger (400), umfassend:

- einen optischen Datenempfänger (401), der konfiguriert ist, um optische Datensignale von der Vorrichtung (200) zu empfangen;
- mindestens zwei Hilfsempfänger (402, 403), die konfiguriert sind, um die Ausrichtungsinformationen von dem Maskierungsübermittler (202) und dem weiteren Maskierungsübermittler (203) der Vorrichtung (200) zu empfangen;

wobei sich der entfernte Empfänger (400) innerhalb einer bestimmten Entfernung (d) von der Vorrichtung (200) befindet.

**15.** Verfahren (600) einer Vorrichtung (200) für optische drahtlose Kommunikation, das Verfahren umfassend die folgenden Schritte der Vorrichtung (200):

- Übermitteln (S601) eines optischen Datensignals durch einen Datenübermittler (201);
- Übermitteln (S602) eines optischen Maskierungssignals durch einen Maskierungsübermittler (202);
- Einstellen (S603) einer bestimmten Entfernung (d) durch das derartige Steuern von mindestens einem des Datenübermittlers (201) und des Maskierungsübermittlers (202), dass ein Abdeckungsbereich (210) des optischen Datensignals durch einen Abdeckungsbereich (220) des optischen Maskierungssignals in einem bestimmten Ausmaß in der bestimmten Entfernung überlappt wird, wobei ein Signal-zu-Rausch-Verhältnis des optischen Datensignals unter einem Schwellenwert gehalten wird und eine Wiederherstellung des optischen Datensignals durch eine andere Vorrichtung, die sich in oder jenseits dieser bestimmten Entfernung (*d*) befindet, erschwert wird;

das optische Maskierungssignal umfassend eine Wellenlängenkomponente, die im Wesentlichen mit einer Wellenlängenkomponente des optischen Datensignals identisch ist.

**Revendications**

1. Dispositif de communication optique sans fil (200), comprenant :

   - un émetteur de données (201) configuré pour émettre un signal optique de données ;
   - un émetteur de masquage (202) configuré pour émettre un signal optique de masquage ;

      dans lequel le signal optique de masquage comprend une composante de longueur d'onde sensiblement identique à une composante de longueur d'onde du signal optique de données ;
      le dispositif (200) étant configuré pour définir une distance donnée (d) par commande de l'un au moins parmi l'émetteur de données (201) et l'émetteur de masquage (202), de sorte qu'une zone de couverture (210) du signal optique de données soit recouverte par une zone de couverture (220) du signal optique de masquage dans une certaine mesure à la distance donnée (*d*), en maintenant un rapport signal/bruit du signal optique de données en dessous d'un seuil et en compliquant la récupération du signal optique de données par un autre dispositif situé à la distance donnée (*d*) et au-delà de celle-ci.

2. Dispositif (200) selon la revendication 1, le dispositif (200) étant en outre configuré pour modifier la distance donnée (*d*) par au moins l'un parmi :

   - le réglage d'un angle de faisceau d'au moins l'un parmi l'émetteur de données (201) et l'émetteur de masquage (202) ;
   - l'inclinaison d'au moins l'un parmi l'émetteur de données (201) et l'émetteur de masquage (202) afin de rapprocher ou d'éloigner les zones de couverture du signal optique de masquage et du signal optique de données l'une de l'autre ;
   - la modification d'une distance de séparation inter-émetteurs entre l'émetteur de données (201) et l'émetteur de masquage (202) ; et
   - la modification d'une puissance de sortie de l'un au moins parmi l'émetteur de données (201) et l'émetteur de masquage (202).

3. Dispositif (200) selon la revendication 1 ou 2, dans lequel l'émetteur de masquage (202) est configuré pour émettre le signal optique de masquage à un niveau de puissance de sortie au moins égal à celui de l'émetteur de données (201).

4. Dispositif (200) selon l'une quelconque des revendications précédentes, le dispositif (200) comprenant au moins un émetteur de masquage supplémentaire (203), dans lequel l'au moins un émetteur de masquage supplémentaire (203) est configuré pour émettre un signal optique de masquage supplémentaire, le dispositif (200) étant en outre configuré pour définir la distance donnée (d) par la commande supplémentaire de l'au moins un émetteur de masquage supplémentaire (203) de sorte que la zone de couverture (210) du signal optique de données soit recouverte par une zone de couverture combinée (220, 230) du signal optique de masquage et de l'au moins un signal optique de masquage supplémentaire à la distance donnée (d) du dispositif (200).

5. Dispositif (200) selon la revendication 4, dans lequel l'émetteur de masquage (202) et l'émetteur de masquage supplémentaire (203) sont placés sur des côtés différents de l'émetteur de données (201) de sorte que la zone de couverture (210) du signal optique de données soit entourée par les zones de couverture combinées (220, 230).

6. Dispositif (200) selon la revendication 4 ou 5, dans lequel l'émetteur de masquage (202) et l'émetteur de masquage supplémentaire (203) sont en outre configurés pour envoyer des informations d'alignement afin d'aider à l'alignement de faisceau entre l'émetteur de données (201) et un récepteur distant.

7. Dispositif (200) selon la revendication 6, dans lequel l'émetteur de masquage (202) et l'émetteur de masquage supplémentaire (203) sont en outre configurés pour utiliser un accès multiple par répartition en code (CDMA) afin d'envoyer, respectivement, les informations d'alignement ; dans lequel les informations d'alignement sont émises à une gamme de fréquences différente soit des signaux de masquage optiques, soit du signal optique de données.

8. Dispositif (200) selon la revendication 6 ou 7, dans lequel les informations d'alignement comprennent des informations relatives au centre de gravité de l'émetteur de données (201).

9. Dispositif (200) selon l'une quelconque des revendications précédentes, le dispositif (200) comprenant en outre un détecteur de distance configuré pour estimer une distance de communication à partir d'un dispositif distant destiné à établir une communication optique sans fil avec le dispositif (200), le dispositif (200) étant en outre configuré pour commander l'émetteur de masquage (202) et l'émetteur de masquage supplémentaire (203) de sorte que la distance de communication soit inférieure ou égale à la distance donnée (d).

10. Dispositif (200) selon la revendication 9, dans lequel le détecteur de distance est un capteur de temps de vol (ToF, Time-of-Flight).

11. Dispositif (200) selon la revendication 9, dans lequel le détecteur de distance est configuré pour estimer la distance de communication en fonction d'informations de temps d'arrivée, de force du signal ou de différence de phase d'un ou de plusieurs signaux reçus provenant du dispositif distant.

12. Dispositif (200) selon l'une quelconque des revendications précédentes, le dispositif (200) comprenant en outre un récepteur de données optiques configuré pour recevoir des signaux optiques de données.

13. Système de communication optique sans fil (100) comprenant :

- un dispositif de communication optique sans fil (200) selon la revendication 1 ; et
- un récepteur optique de données distant (300) configuré pour recevoir le signal optique de données provenant du dispositif (200) ;

dans lequel le récepteur optique de données distant (300) est situé au maximum à la distance donnée (d) du dispositif (200).

14. Système de communication optique sans fil (100) comprenant :

- un dispositif de communication optique sans fil (200) selon la revendication 6 ; et
- un récepteur distant (400) comprenant :

  - un récepteur de données optiques (401) configuré pour recevoir le signal optique de données provenant du dispositif (200) ;
  - au moins deux récepteurs auxiliaires (402, 403) configurés pour recevoir les informations d'alignement provenant de l'émetteur de masquage (202) et de l'émetteur de masquage supplémentaire (203) du dispositif (200) ;

dans lequel le récepteur distant (400) est situé au maximum à la distance donnée (d) du dispositif (200).

15. Procédé (600) relatif à un dispositif de communication optique sans fil (200), le procédé comprenant les étapes suivantes relatives au dispositif (200) :

- transmettre (S601) un signal optique de données par un émetteur de données (201) ;
- transmettre (S602) un signal optique de masquage par un émetteur de masquage (202) ;
- définir (S603) une distance donnée (d) par commande de l'un au moins parmi l'émetteur de données (201) et l'émetteur de masquage (202), de sorte qu'une zone de couverture (210) du signal optique de données soit recouverte par une zone de couverture (220) du signal optique de masquage dans une certaine mesure à la distance donnée, en maintenant de ce fait un rapport signal/bruit du signal optique de données en dessous d'un seuil et en compliquant la récupération du signal optique de données par un autre dispositif situé à la distance donnée (d) et au-delà de celle-ci ;

dans lequel le signal de masquage optique comprend une composante de longueur d'onde sensiblement identique à

une composante de longueur d’onde du signal de données optique.

**FIG. 1**

**FIG. 2**

FIG. 3

**FIG. 4**

**FIG. 5**

**FIG. 6**

600

**FIG. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3943875 A1

- AU 2021103975 A4

### Non-patent literature cited in the description

- **CHO SUNGHWAN et al.** *Securing Visible Light Communications with Spatial Jamming*